Europäisches Patentamt

European Patent Office

Office européen des brevets

(11) Publication number: **0 187 527 B1**

# EUROPEAN PATENT SPECIFICATION

(45) Date of publication of patent specification: **20.02.91**   (51) Int. Cl.⁵: **B60L 15/00, B60L 13/02**

(21) Application number: **85309458.9**

(22) Date of filing: **23.12.85**

(54) Lim secondary reactance compensation and thrust control.

(30) Priority: **04.01.85 US 688938**

(43) Date of publication of application:
**16.07.86 Bulletin 86/29**

(45) Publication of the grant of the patent:
**20.02.91 Bulletin 91/08**

(84) Designated Contracting States:
**DE FR GB IT SE**

(56) References cited:
**DE-A- 2 635 464**
**US-A- 3 712 240**
**US-A- 3 721 874**

(73) Proprietor: **U T D C INC.**
**33 Yonge Street**
**Toronto Ontario M5E 1E7(CA)**

(72) Inventor: **Ballantyne, John**
**942 Alpine Court**
**Kingston, Ontario K7P 1N8(CA)**

(74) Representative: **Seaborn, George Stephen**
**c/o Edward Evans & Co. Chancery House**
**53-64 Chancery Lane**
**London WC2A 1SD(GB)**

## Description

### FIELD OF THE INVENTION

The invention relates to linear induction motor (LIM) transportation systems, and in particular to thrust control and power factor improvement from on-board of a LIM vehicle.

### BACKGROUND OF THE INVENTION

LIM transportation systems are well-known. The most common type involves a vehicle-borne primary which generates the moving magnetic field required to propel the vehicle and a track-side secondary which is simply a reaction rail with a steel backing member and an aluminium facing. The steel backing member together with the primary define a magnetic path for the magnetic field generated by the primary, and the aluminium facing provides a low resistance medium in which secondary currents necessary for generation of thrust are induced. In some applications, the reaction rail may be constructed as a ladder-like structure with transverse conductor bars of varying resistance to alter the thrust characteristics of the system. In theme-park and airport systems, the arrangement of the LIM primary and secondary is often reversed: a track-side primary is provided, and the vehicle carries the secondary, an aluminium-over-steel reaction plate, marginally spaced from the primary.

DE-A-2 635 464 discloses a transportation system comprising a linear induction motor primary for generation of a moving magnetic field disposed along a path and a vehicle for travelling along the path, the vehicle having a linear induction motor secondary including a reaction winding whereby the vehicle can be propelled along the path by the moving magnetic field.

In any LIM transportation system, means must be provided for regulating thrust in order to control acceleration and deceleration of the vehicle, e.g. to maintain vehicle speed on a grade. In a system involving a vehicle-borne secondary which is normally a reaction plate thrust control is effected by providing appropriate voltage control at each of the LIM primaries on the associated track. Another method of thrust control involves varying the reluctance of the magnetic circuit between the primary and secondary by control of the size of the air gap between the two. For example, the air gap may be made to close in proportion to vehicle weight thereby providing increased thrust. However, such a system is not particularly efficient, and from its very nature assumes that the magnetic circuit between primary and secondary will not be in an optimum orientation at all times.

Accordingly, for a vehicle fitted with a linear induction motor secondary, it is desirable to provide on-board control of the thrust, and also to provide reactance compensation to improve the power factor.

### BRIEF SUMMARY OF THE INVENTION

The invention relates to a transportation system including a vehicle with a LIM secondary and to such a vehicle.

In accordance with a first aspect of the invention, there is provided a transportation system, comprising:

a linear induction motor primary for generation of a moving magnetic field, disposed along a path;

and a vehicle for travelling along the path, the vehicle having a linear induction motor secondary including a reaction winding whereby the vehicle can be propelled along the path by the moving magnetic field;

characterized by:

means on the vehicle for setting the thrust characteristics of the secondary, the setting means serving to connect ends of the reaction winding with a finite impedance whereby current can flow in the reaction winding, said setting means including a capacitor electrically connecting the ends of the reaction winding.

In accordance with a second aspect of the invention, there is provided a vehicle for use in a transportation system including a linear induction motor primary which is disposed along a path and which generates a moving magnetic field, the vehicle comprising:

a linear induction motor secondary including a reaction winding, whereby the vehicle can be propelled along the path by the moving magnetic field;

characterized by:

means for setting the thrust characteristics of the secondary, the setting means connecting the ends of the reaction winding with a finite impedance whereby current can flow in the reaction winding, said setting means including a capacitor electrically connecting the ends of the reaction winding.

In accordance with a third aspect of the invention there is provided a vehicle for use in a transportation system including a track fitted with a three-phase linear induction motor primary which generates a moving magnetic field, comprising:

a linear induction motor secondary including three reaction windings connected in three-phase relationship whereby the vehicle can be propelled along the track by the moving magnetic field, each of the reaction windings having a pair of ends;

characterized by:

means for setting the thrust characteristics of the secondary, the setting means serving for each of the reaction windings to connect the ends of the reaction winding with a finite impedance whereby current can flow in the winding, said setting means including three capacitors, the ends of each of the reaction windings being electrically connected by a different one of the capacitors.

The reaction winding of the secondary serves as the electric circuit for conduction of currents induced by the moving magnetic field of the primary during generation of thrust. The setting means serve to connect ends of the reaction winding with a finite impedance so that current can flow in the reaction winding. Depending on the magnitude of the impedance, a different thrust characteristic is provided in the secondary.

Further, the setting means may include means for selectively varying the value of the impedance whereby the thrust characteristics of the secondary can be selectively altered. As is known for induction motors, increasing the secondary resistance increases thrust at high slips, whilst reducing thrust at low slips. Connecting capacitors across the secondary resistance improves the power factor. Also, this increases thrust at low speed and high slip but has little effect at low slip. It should be noted that, as compared to its rotary counterpart, a LIM motor generally has a low power factor. Further, a LIM frequently operates in the high slip/low speed range in which reactance compensation is most effective. Therefore, it is desirable to provide some reactance compensation.

It should also be noted that, unlike rotary motors, the present invention provides and can control without the need for sliding contacts both a resistance and capacitance as an impedance in the secondary circuit.

This impedance is provided on board the vehicle and the resistance can be controlled by an operator, or possibly automatically. In other words, the impedance moves with the secondary on board the vehicle.

## BRIEF DESCRIPTION OF THE DRAWINGS

Various objects and advantages of the present invention will be explained with reference to drawings in which:

fig. 1 is a schematic representation of a transportation system including a vehicle fitted with a LIM secondary and adapted to travel along a track constructed with a LIM primary;

fig. 2 is a perspective representation of a laminated iron core and three-phase winding which form the LIM secondary;

fig. 3 is a schematic representation of the three-phase winding;

figs. 4 and 5 schematically illustrate alternative ways of connecting the winding; and,

fig. 6 is a schematic representation of the LIM primary and secondary together with apparatus for regulating thrust in the LIM secondary;

fig. 7 is a graph illustrating typical thrust-speed characteristics of a LIM secondary; and,

fig. 8 is a graph illustrating the effect of capacitive compensation on the thrust-speed characteristics of a LIM secondary.

## DESCRIPTION OF PREFERRED EMBODIMENT

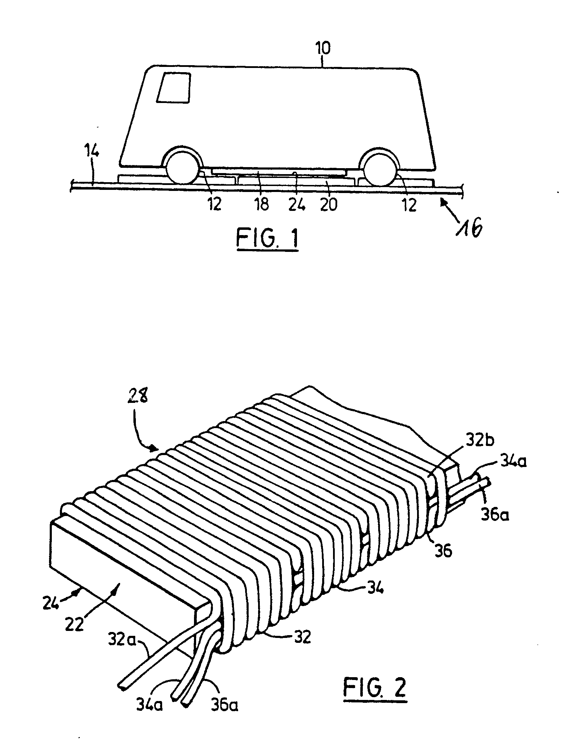

Reference is made to fig. 1 which illustrates a transport system including a vehicle 10 with flanged wheels 12 (only two apparent in the view of fig. 1) which ride paired rails 14 (only one apparent in the view of fig. 1) of a track 16. Alternatively, the vehicle could be supported by an air cushion, could be a wire guided vehicle or the like fitted with plain, unflanged wheels, or magnetically levitated with appropriate modification of the associated track. The vehicle 10 carries on its underside a LIM secondary 18 which is marginally spaced from a three-phase LIM primary 20 constructed in the track 16 between the rails 14. The view of fig. 1 is intended only as a symbolic representation of a LIM transportation system, and various details of the construction of such a system apart from the present invention will be readily apparent to one skilled in the art.

The LIM secondary 18 has the general construction illustrated in fig. 2. The secondary 20 includes a laminated iron core 22 which forms a magnetic circuit with the primary 20 for conduction of the moving magnetic field generated by the primary 20 in operation. The iron core 22 has a surface 24 which is normally proximately located to an expcsed surface of the primary 20 with spacing typically in the order of 5 mm. to 15 mm. Around the iron core 22, there are wound the three phases of a three-phase winding 28, these phases being designated 32, 34, 36. The phases 32, 34, 36 are wound as a Gramme winding. In Figure 2, the mechanical interrelationship of the three phases 32, 34, 36 is shown. For the first phase 32, there are connecting leads, integral with the coil itself, denoted by 32a and 32b, the lead 32b continuing into the next coil. Similarly for the phase 34, there are leads 34a, 34b. For simplicity of manufacture, all the individual coils are wound in the same direction, although as detailed below half the coils are reversed by their connections, relative to the other half. After winding, appropriate connections are made between the coils. The three phases 32, 34, 36 are repeated along the length of the iron core 22. As shown in Figure 3, in known manner, for each phase, the alternate sections are reversed. This will necessitate further leads being provided, it being necessary to have four longitudinally extending leads at each reversed coil. These additional leads simply extend along the outside of the coils and are made when the interconnections between the coils are made.

Referring to Figure 3, there is shown the arrangement of the individual coils or sections for each of the phases 32, 34, 36. As shown, alternate sections are reversed and reversed sections designated $\overline{32}$ , $\overline{34}$ , $\overline{36}$ respectively. Thus, the phase 32 starts with a short coil, of half the length of the other coils, and then has a full, reversed coil. The second phase 34 starts with a reversed coil, whilst the third phase 36 starts with an ordinary coil. This arrangement of the coil sections effectively gives 6 coil sections between pairs of notional poles, as is known (it being appreciated that there are no discrete poles).

Examination of the interconnections between the coil sections 32, 34, 36, $\overline{32}$ , $\overline{34}$ , $\overline{36}$ shows that alternately one requires 2 and 4 interconnecting leads. Thus at 120, due to the normal section 32, there are two interconnections. But, at the adjacent section 122, there is a requirement for four interconnections, due to the reversed section 34.

For each full length section 24 turns of No. 15 wire will be used to give a length of 38mm. For the two short sections 32 at either end, 12 turns of wire will be used to give a length of 19mm. This will give an overall length of 6.84mm. If these dimensions vary due to tolerance build-up, a single turn can be added or subtracted at a suitable coil to compensate.

As will be appreciated by one skilled in the art, the number of coils and their general construction and dimensioning will of course be dependent on the required thrust characteristics. Alternative coil arrangements can be used. For this winding only the lower half of each coil contributes to the thrust, as the upper half is not cut by the magnetic field. If desired a coil arrangement in which all, or nearly all, of each coil contributes to the thrust can be used.

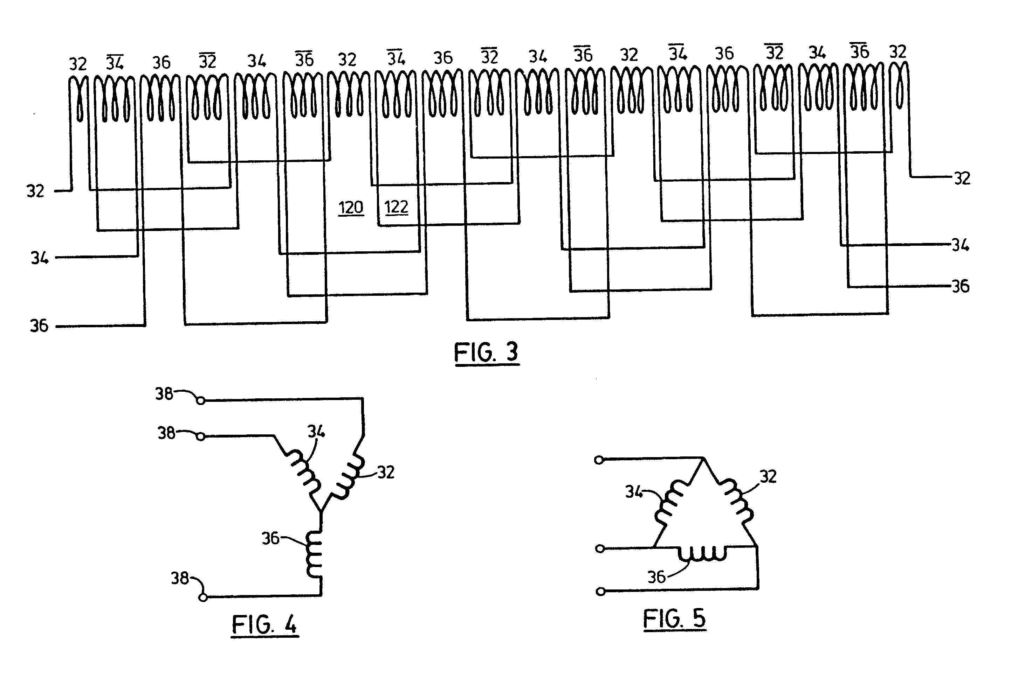

The phase windings 32, 34, 36 are electrically connected in a WYE connection as illustrated in fig. 4 in which individual phase windings have been represented by the electric symbol for an inductor, although each phase has a number of separate coils. Terminals 38 will normally be made available to electrically access ends of the individual phase windings. Alternatively, the windings could be connected in the DELTA configuration of fig. 5. The windings of the secondary will normally correspond in connection type and general dimensioning to the windings of the primary 20.

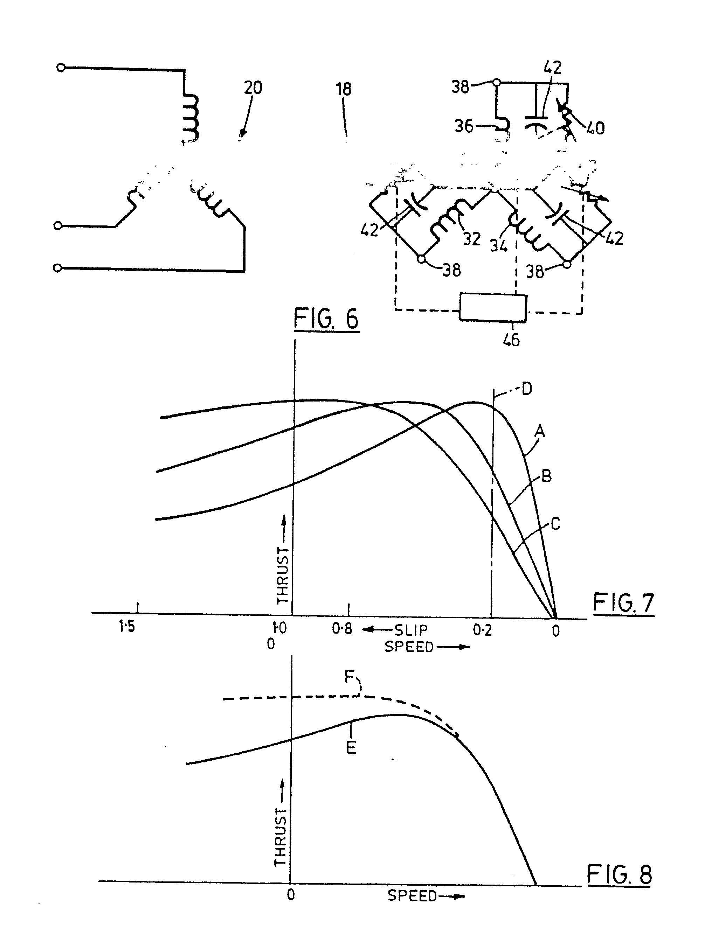

Fig. 6 schematically illustrates the LIM secondary and primary 18, 20 together with apparatus for regulating thrust in the LIM secondary 18. In the view of fig. 6, the primary 20 is shown as a WYE-connected three-phase winding that is magnetically coupled to the WYE-connected three-phase secondary winding 18. The ends of each of the individual phase windings 32, 34, 36 are connected together through a controllably variable resistor 40 and a capacitor 42 parallel connected with the resistor 40, thereby permitting current flow in the individual phase windings during generation of thrust. The capacitors 42 have a predetermined value selected according to the characteristics of the particular LIM secondary 18; however, the resistive value of the resistors 40 can be selectively varied in unison during operation of the vehicle 10 by means of manually-operable control circuitry 46 which is located on a control panel (not illustrated) located on the vehicle 10. The individual effects of the capacitive and resistive coupling of the ends of the phase windings will be discussed separately below.

Fig. 7 is intended to illustrate in a general way the effect of variation of the value of the resistors 40 on the thrust characteristics of the LIM secondary 18. The thrust characteristics illustrated assume that the primary 18 is operated from a constant voltage constant frequency supply, and the effect of the capacitor 42 has been ignored. Three curves A, B and C are shown corresponding respectively to a relatively low resistance value between the end terminals of the phase-windings, an intermediate resistance value and a high resistance value. With the ends of each of the phase windings electrically open, no current can flow in the phase windings and no thrust can be generated. However, by connecting the ends of the phase windings with selected resistive impedances by adjustment of the resistors 40, the thrust characteristics of the secondary 18 can be selected. Thus, for example, at an operating speed and slip indicated by the vertical line D in fig. 7, selection of resistive values corresponding to the curves A, B and C can produce three different levels of thrust. If, for example, the vehicle 10 were about to approach an upward grade at the operating speed indicated by the line D, speed could be maintained by simply lowering the resistive value of the variable resistors 40 to obtain the thrust necessary to maintain vehicle speed. It will thus be appreciated that given a particular vehicle and a particular secondary with a reaction winding the control means 46 can be appropriately programmed so that an operator aboard the vehicle can accelerate and decelerate the vehicle and accommodate the effect of vehicle loading on vehicle speed by adjusting the resistive impedance across the phase windings.

Fig. 8 illustrates in the general way the effect of connecting capacitors 44 across the individual phase windings. Once again, operation of the primary 20 from a constant voltage, constant frequency supply is assumed. The curve E indicates the thrust characteristics of the secondary 18 without the presence of the capacitors 42. With the capacitors 42, in high slip operation the thrust characteristics of the secondary 18 are altered to follow the curve F shown in stippled outline. The general effect of the capacitors 42 is to compensate for reactive power normally stored in the air gap between the LIM secondary and primary 18, 20. The compensating effect diminishes with high speed, low slip operation; however, since LIM vehicles are often operated in high slip conditions, capacitive compensation offers a practical means for improving the power factor of such a vehicle. Such compensation although preferred, need not be used together with the resistive thrust control technique described above.

It will be appreciated that a particular embodiment of the invention has been described, and that modifications may be made therein without departing from the invention as defined in the appended claims. In particular, continuously variable resistance need not be used in resistive thrust control, and a number of discrete resistors could be switched in and out of connection with the phase windings to obtain predetermined thrust characteristics under predetermined conditions, such as vehicle overloading, acceleration and deceleration . In fact, finite predetermined resistors can be connected across the windings to effectively permanently set the characteristics of the LIM secondary. With multi-phase windings, a balanced arrangement with like impedances across each of the phase windings is preferred, although not absolutely necessary.

Additionally, various arrangements can be provided to switch additional resistors in automatically in response to increase loads. Thus for a passenger vehicle, the seats can be connected to switches to switch in more resistance, to compensate for the increased load.

Whilst the described embodiment has been in relation to a vehicle arranged to run along a track, it can be applied to a vehicle that runs on a surface and is guided, to follow the LIM primaries, by some other means.

## Claims

1. A transportation system, comprising:
   a linear induction motor primary (20) for generation of a moving magnetic field, disposed along a path (16);
   and a vehicle (10) for travelling along the path, the vehicle having a linear induction motor secondary (18) including a reaction winding (28) whereby the vehicle can be propelled along the path by the moving magnetic field;
   characterized by:
   means (46) on the vehicle for setting the thrust characteristics of the secondary, the setting means serving to connect ends of the reaction winding with a finite impedance whereby current can flow in the reaction winding, said setting means including a capacitor (42) electrically connecting the ends of the reaction winding.

2. the transportation system of Claim 1 in which the setting means (46) include means for selectively varying the value of the impedance whereby the thrust characteristics of the secondary (18) can be selectively altered.

3. The transportation system of Claim 2 in which the setting means (46) include a controllably variable resistance (40) electrically connecting the ends of the reaction winding (28).

4. The transportation system of Claim 1 or 2 in which the setting means (46) include a fixed resistor (40) electrically connecting the ends of the reaction winding.

5. A vehicle (10) for use in a transportation system including a linear induction motor primary (20) which is disposed along a path (16) and which generates a moving magnetic field, the vehicle comprising:
   a linear induction motor secondary (18) including a reaction winding (28), whereby the vehicle can be propelled along the path by the moving magnetic field;
   characterized by:
   means (46) for setting the thrust characteristics of the secondary, the setting means connecting the ends of the reaction winding with a finite impedance whereby current can flow in the reactioin winding, said setting means including a capacitor (42) electrically connecting the ends of the reaction winding.

6. The vehicle (10) of Claim 5 in which the setting means (46) include means for selectively varying the value of the impedance whereby the thrust characteristics of the secondary can be selectively altered.

7. The vehicle (10) of Claim 5 in which the setting means (46) include a controllably variable resistance (40) electrically connecting the ends of the reaction winding (28).

8. The vehicle (10) of Claim 5 or 6 in which the setting means (46) include a fixed resistor electrically connecting the ends of the reaction winding (28).

9. A vehicle for use in a transportation system including a track (16) fitted with a three-phase linear induction motor primary (20) which generates a moving magnetic field, comprising:

a linear induction motor secondary (18) including three reaction windings (32,34,36) connected in three-phase relationship whereby the vehicle can be propelled along the track by the moving magnetic field, each of the reaction windings having a pair of ends;

characterized by:

means (46) for setting the thrust characteristics of the secondary, the setting means serving for each of the reaction windings to connect the ends of the reaction winding with a finite impedance whereby current can flow in the winding, said setting means including three capacitors (42), the ends of each of the reaction windings being electrically connected by a different one of the capacitors.

10. The vehicle (10) of Claim 9 in which the setting means (46) include means for selectively varying the value of the impedances provided by the setting means between the ends of th each of the reaction windings (32,34,36) whereby the thrust characteristics of the secondary (18) can be altered.

11. The vehicle (10) of Claim 10 in which the setting means (46) include three controllably variable resistances (40), the ends of each reaction winding (32,34,36) being electrically connected by a different one of the resistors.

12. The vehicle of Claim 9 or 10 in which the setting (46) means include three fixed resistors, the end of each of the reaction windings (32,34,36) being connected by a different one of the three resistors.

**Revendications**

1. Système de transport comprenant :

un primaire (20) pour moteur à induction linéaire, destiné à générer un champ magnétique mobile, disposé le long d'une voie (16) ;

ainsi qu'un véhicule (10) destiné à se déplacer le long de la voie, le véhicule étant muni d'un secondaire (18) pour moteur à induction linéaire, comprenant un enroulement à réaction (28), le véhicule pouvant ainsi être propulsé le long de la voie par l'intermédiaire du champ magnétique mobile ;

**caractérisé par :**

un moyen (46) disposé sur le véhicule et destiné à régler les caractéristiques de poussée du secondaire, le moyen de réglage servant à raccorder les extrémités de l'enroulement à réaction, à une impédance finie, le courant pouvant ainsi parcourir l'enroulement à réaction, le moyen de réglage comprenant un condensateur (42) raccordant électriquement les extrémités de l'enroulement à réaction.

2. Système de transport selon la revendication 1, dans lequel le moyen de réglage (46) comprend un moyen destiné à faire varier sélectivement la valeur de l'impédance, ce qui permet de modifier sélectivement les caractéristiques de poussée du secondaire (18).

3. Système de transport selon la revendication 2, dans lequel le moyen de réglage (46) comprend une résistance (40) à variation réglée, qui raccorde électriquement les extrémités de l'enroulement à réaction (28).

4. Système de transport selon la revendication 1 ou 2, dans lequel le moyen de réglage (46) comprend une résistance fixe (40) raccordant électriquement les extrémités de l'enroulement à réaction.

5. Véhicule (10) destiné à être utilisé dans un système de transport qui comprend un primaire (20) pour moteur à induction linéaire, disposé le long d'une voie (16) et générant un champ magnétique mobile, le véhicule comprenant :

un secondaire (18) pour moteur à induction linéaire, comprenant un enroulement à réaction (28), le véhicule pouvant ainsi être propulsé le long de la voie par l'intermédiaire du champ magnétique mobile;

**caractérisé par :**

un moyen (46) destiné à régler les caractéristiques de poussée du secondaire, le moyen de réglage servant à raccorder les extrémités de l'enroulement à réaction, à une impédance finie, le courant pouvant ainsi parcourir l'enroulement à réaction, le moyen de réglage comprenant un condensateur (42) raccordant électriquement les extrémités de l'enroulement à réaction.

6. Véhicule (10) selon la revendication 5, dans lequel le moyen de réglage (46) comprend un moyen destiné à faire varier sélectivement la valeur de l'impédance, ce qui permet de modifier sélectivement les caractéristiques de poussée du secondaire (18).

7. Véhicule (10) selon la revendication 5, dans lequel le moyen de réglage (46) comprend une résistance (40) à variation réglée, qui raccorde électriquement les extrémités de l'enroulement à réaction (28).

8. Véhicule (10) selon la revendication 5 ou 6, dans lequel le moyen de réglage (46) comprend une résistance fixe (40) raccordant électriquement les extrémités de l'enroulement à réaction (28).

9. Véhicule destiné à être utilisé dans un système de transport comprenant une piste (16) équipée d'un primaire (20) pour moteur à induction linéaire, triphasé, générant un champ magnétique mobile, le véhicule comprenant :

un secondaire (18) pour moteur à induction linéaire comprenant trois enroulements à réaction (32, 34, 36) raccordés en relation triphasée, le véhicule pouvant ainsi être propulsé le long de la piste par l'intermédiaire du champ magnétique mobile, chacun des enroulements à réaction étant muni d'une paire d'extrémités ;

**caractérisé par :**

un moyen (46) destiné à régler les caractéristiques de poussée du secondaire, le moyen de réglage servant, pour chacun des enroulements à réaction, à raccorder les extrémités de l'enroulement à réaction avec une impédance finie, le courant pouvant ainsi parcourir l'enroulement, le moyen de réglage comprenant trois condensateurs (42), les extrémités de chacun des enroulements à réaction étant raccordées électriquement par l'intermédiaire d'un condensateur différent.

10. Véhicule (10) selon la revendication 9, dans lequel le moyen de réglage (46) comprend un moyen destiné à faire varier sélectivement la valeur des impédances fournies par le moyen de réglage, entre les extrémités de chacun des enroulements à réaction (32, 34, 36), ce qui permet de modifier les caractéristiques de poussée du secondaire (18).

11. Véhicule (10) selon la revendication 10, dans lequel le moyen de réglage (46) comprend trois résistances (40) à variation réglée, les extrémités de chaque enroulement à réaction (32, 34, 36) étant électriquement raccordées par l'intermédiaire d'une résistance différente.

12. Véhicule selon la revendication 9 ou 10, dans lequel le moyen de réglage (46) comprend trois résistances fixes, l'extrémité de chacun des enroulements à réaction (32, 34, 36) étant raccordée par l'intermédiaire d'une résistance différente.

**Ansprüche**

1. Transportsystem mit einem magnet ischen Linearantrieb mit einem längs einer Bahn (16) angeordneten Primärkreis (20) zur Erzeugung eines magnetischenn Wanderfeldes sowie einem entlang dieser Bahn verfahrbaren Fahrzeug (10) Sekundärkreis (18) des Linearantriebes, der eine Reaktanzwicklung (28) aufweist, so daß das Fahrzeug durch das magnetische Wanderfeld entlang der Bahn antreibbar ist, gekennzeichnet durch Mittel (46) an dem Fahrzeug zur Einstellung der Schubcharakteristik des Sekundärkreises, wobei diese die Enden der Reaktanzwicklung über eine endliche Impedanz so verbinden, daß ein Strom in der Wicklung fließen kann, und wobei die Einstellmittel einen die Enden der Reaktanzwicklung (42) elektrisch miteinander verbindenden Kondensator (42) umfassen.

2. Transportsystem gemäß Anspruch 1, dadurch gekennzeichnet, daß die Einstellmittel (46) Vorrichtungen zur selektiven Veränderung des Impedanzwerts umfassen, so daß die Schubcharakteristik des Sekundärkreises (18) wahlweise geändert werden kann.

3. Transportsystem gemäß Anspruch 2, dadurch gekennzeichnet, daß die Einstellmittel (46) einen steuerbaren Stellwiderstand (40) umfassen, der die elektrische Verbindung der Enden der Reaktanzwicklung (28) herstellt.

4. Transportsystem gemäß Anspruch 1 oder 2, dadurch gekennzeichnet, daß die Einstellmittel (46) einen Festwiderstand (40) zur elektrischen Verbindung der Enden der Reaktanzwicklung enthalten.

5. Fahrzeug (10) zum Einsatz in einem Transportsystem mit einem längs einer Bahn (16) angeordneten Primärkreis (20) eines magnetischen Linearantriebes (20), der ein magnetischen Wanderfeld erzeugt, wobei das Fahrzeug einen Sekundärkreis (18) des magnetischen Linearantriebes mit einer Reaktanzwicklung (28) aufweist, um das Fahrzeug entlang der Bahn durch das magnetische Wanderfeld anzutreiben, gekennzeichnet durch Einstellmittel (46) zur Einstellung der Schubcharakteristik des Sekundärkreises, wobei diese die Enden der Reaktanzwicklung mit einer endlichen Impedanz so verbinden, daß ein Strom in der Wicklung fließen kann, und wobei die Einstellmittel einen die enden der Reaktanzwicklung elektrisch miteinander verbindenden Kondensator (42) umfassen.

6. Fahrzeug (10) gemäß Anspruch 5, dadurch gekennzeichnet, daß die Einstellmittel (46) Vorrichtungen zur selektiven Veränderung des Impedanzwertes umfaßt, so daß die Schubcharakteristik des Sekundärkreises wahlweise verändert werden kann.

7. Fahrzeug (10) gemäß Anspruch 5, dadurch gekennzeichnet, daß die Einstellmittel (46) einen steuerbaren Stellwiderstand (40) umfassen, der die elektrische Verbindung der Enden der Reaktanzwicklung (28) herstellt.

8. Fahrzeug (10) gemäß Anspruch 5 oder 6, dadurch gekennzeichnet, daß die Einstellmittel (46) einen Festwiderstand zur elektrischen Verbindung der Enden der Reaktanzwicklung (28) enthalten.

9. Fahrzeug zum Einsatz in einem Transportsystems mit einem längs einer Fahrbahn (16) angeordneten Primärkreis (20) eines magnetischen Linearantriebes mit einem Drehstrom-Primärkreis (20), der ein magnetisches Wanderfeld erzeugt, in dem ein Sekundärkreis (18) des magnetischen Linearantriebes mit drei dreiphasig verschalteten Reaktanzwicklungen (32,34,36) enthalten ist, um das Fahrzeug längs seiner Bahn durch das magnetische Wanderfeld anzutreiben, wobei jede Reaktanzwicklung ein Endenpaar aufweist, gekennzeichnet durch Mittel (46) zur Einstellung der Schubcharakteristik des Sekundärkreises, wobei diese die Enden einer je-den Reaktanzwicklung über eine endliche Impedanz so verbinden, daß Ströme in den Wicklungen fließen können, wobei die Einstellmittel drei Kondensatoren (42) umfassen und die Enden einer jeden Reaktanzwicklung durch jeweils einen anderen Kondensator elektrisch verbunden sind.

10. Fahrzeug (10) gemäß Anspruch 9, dadurch gekennzeichnet, daß die Einstellmittel (46) Vorrichtungen zur selektiven Veränderung des durch die Stellmittel zwischen den Enden einer jeden der Reaktanzwicklungen (32,34,36) hergestellten Impedanzwertes umfassen, so daß die Schubcharakteristik des Sekundärkreises (18) geändert werden kann.

11. Fahrzeug (10) gemäß Anspruch 10, dadurch gekennzeichnet, daß die Einstellmittel (46) drei steuerbare Stellwiderstände (40) umfassen, wobei die Enden einer jeden Reaktanzwicklung (32,34,36) durch jeweils einen anderen Widerstand elektrisch miteinander verbunden werden.

12. Fahrzeug gemäß Anspruch 9 oder 10, dadurch gekennzeichnet, daß die Einstellmittel (46) drei Festwiderstände umfassen, wobei die Enden einer jeden der Reaktanzwicklungen (32,34, 36) durch jeweils einen anderen der drei Widerstände miteinander gekoppelt sind.

FIG. 1

FIG. 2

FIG. 3

FIG. 4

FIG. 5

FIG. 6

FIG. 7

FIG. 8